# EUROPEAN PATENT APPLICATION

(11) **EP 1 211 901 A2**
(43) Date of publication of application: **05.06.2002**
(21) Application number: 01309053.5
(22) Date of filing: 25.10.2001
(51) Int. Cl.: H04N 9/31

(54) **Aperture element for a video projector and a video projector using the aperture element**

(30) Priority: 26.10.2000 JP 2000326279
(71) Applicant: NEC Viewtechnology, Ltd., Tokyo 108-0014 (JP)
(72) Inventor: Makita, Kazuya, c/o NEC Vieuwtechnology, Ltd., Tokyo (JP)
(74) Representative: Orchard, Oliver John

(57) **Abstract**

A reflecting portion is formed on a periphery of an opening portion 20 of an aperture element for a video projector. The reflecting portion 21 reflects a portion of the illumination light illuminating a reflecting type display element, which is other than a necessary portion, for expanding and projecting an image information by a projecting lens to an area outside an incident area of the projecting lens, such that the light portion is not incident on the projecting lens.

## Description

The present invention relates to an aperture element for a video projector and a video projector using the aperture element. A particular arrangement will be described below, by way of example, in the belief that it will enable the invention to be better understood, in which there is an aperture element in an illuminating optical system, which is positioned between a reflecting type display and a light source of a video projector and which includes a projecting lens system, and a video projector using the same aperture element.

In a previously proposed reflecting type video projector using a reflecting type display, such as a reflecting type liquid crystal display panel, or a DMD (Digital Micromirror Device, a registered trademark of Texas Instruments, Inc.), an aperture element is arranged in an illuminating optical system provided between a light source and the reflecting type display.

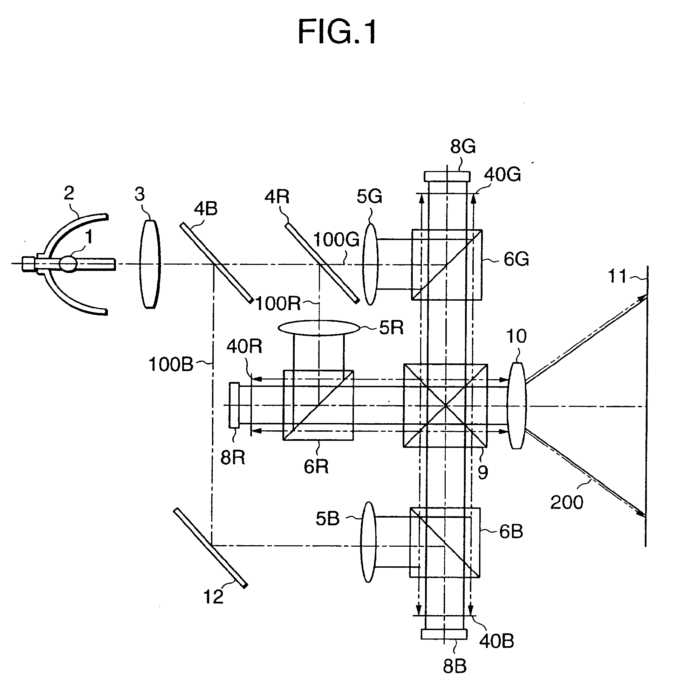

FIG. 1 of the accompanying drawings shows schematically an arrangement of a previously proposed reflecting type video projector. In FIG. 1, the previously proposed reflecting type video projector includes a light source 1, a reflector 2, a convex lens 3, dichroic mirrors 4B and 4R, convex lenses 5B, 5G and 5R, polarizing beam splitter 6B, 6G and 6R, reflecting type liquid crystal panels 8B, 8G and 8R, a color synthesizing prism 9, a projecting lens 10, a screen 11, a reflecting mirror 12 and identical aperture elements 40B, 40G and 40R.

The aperture element 40B is substantially parallel to the reflecting type liquid crystal panel 8B and the aperture elements 40G and 40R are substantially parallel to the reflecting type liquid crystal panels 8G and 8R, respectively, in a similar manner.

A reference numeral 100B in FIG. 1 identifies an illuminating optical system of the blue illuminating light component of white light emitted from the light source 1. This will be referred to as a "B system", hereinafter. Similarly, a reference numeral 100G identifies an illuminating optical system of the green illuminating light component of white light emitted from the light source 1 and is referred to as a "G system", hereinafter, and a reference numeral 100R identifies an illuminating optical system of the red illuminating light component of white light emitted from the light source 1 and is referred to as an "R system", hereinafter.

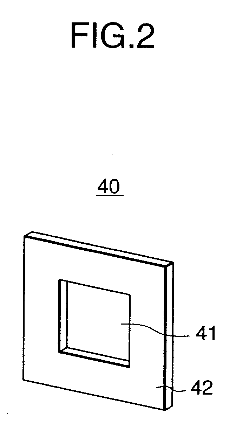

FIG. 2 is a perspective view of a previously proposed aperture element 40, which is any one of the identical aperture elements 40B, 40G and 40R shown in Fig. 1. In FIG. 2, the aperture element 40 includes an opening portion 41 for passing only a light component of the illuminating light, which is necessary to project an image onto the screen 11, to illuminate the reflecting type liquid crystal panels 8B, 8G and 8R and a light shield portion 42 for blocking other useless or detrimental light portion of the illumination light to prevent the useless light from illuminating the reflecting type liquid crystal panels 8B, 8G and 8R.

The operation of the previously proposed reflecting type video projector and the function of the aperture element 40 will now be described with reference to FIG. 1 and FIG. 2. In FIG. 1 and FIG. 2, light emitted from the light source 1 is reflected by the reflector 2, which is a parabolic mirror, as illumination light.

The illumination light is converted into a substantially parallel light beam by the convex lens 3 and separated into, for example, the three primary colors (blue, red and green) illumination lights by the dichroic mirrors 4B and 4R. That is, the blue color light of the illumination light beam from the convex lens 3 is selectively reflected by the dichroic mirror 4B and light of the remaining colors passes through the dichroic mirror 4B.

The dichroic mirror 4R selectively reflects red color light of the light passed through the dichroic mirror 4B and allows the remaining green color illumination light to pass through. The behavior of the three color illumination lights separated in this manner will be described in the order of the B system, the G system and the R system.

In the B system, the blue color illumination light reflected by the dichroic mirror 4B is reflected by the reflecting mirror 12, passes through the convex lens 5B to the polarizing beam splitter 6B and is emitted to the liquid crystal panel 8B.

The blue color illumination light is directed to the aperture element 40B and only a portion thereof, which is necessary to project the image information displayed on the liquid crystal panel 8B onto the screen 11, passes through the opening portion 41 of the aperture element 40B. The remaining useless light portion of the blue color illumination bight is blocked by the light shield member 42 of the aperture element 40B, so that it does not illuminate the liquid crystal panel 8B.

The blue light passed through the opening portion 41 of the aperture element 40B is incident substantially vertically onto the liquid crystal panel 8B. The liquid crystal panel 8B modulates the blue illumination light optically and emits an image light (image information). The image light emitted from the liquid crystal panel 8B passes through the opening portion 41 again and is incident on the polarizing beam splitter 6B.

The polarizing beam splitter 6B allows a predetermined polarized light component of the image light to pass therethrough to the color synthesizing prism 9.

In the G system, the green color illumination bight passed through the dichroic mirror 4R is incident on the polarizing beam splitter 6G through the convex lens 5G and directed to the liquid crystal panel 8G.

Similarly to the blue color illumination light, only portion of the green illumination color, which is necessary to project the image information displayed on the liquid crystal panel 8G onto the screen 11, passes through the opening portion 41 of the aperture element 40G. The remaining useless light portion of the blue color illumination light is blocked by the light shield member 42 of the aperture element 40G, so that it does not illuminate the liquid crystal panel 8G. Since the operation of the G system after the aperture element is similar to that of the B system, detailed description thereof is omitted.

In the R system, the red color illumination light reflected by the dichroic mirror 4R is incident on the polarizing beam splitter 6R through the convex lens 5R and directed to the liquid crystal panel 8R similarly to the green color illumination light. Since the operation of the R system thereafter is similar to that of the B and G systems, detailed description thereof is omitted.

The blue, green and red color image light emitted from the respective polarizing beam splitters 6B, 6G and 6R are synthesized by the color synthesizing prism 9. The synthesized image light is expanded and projected onto the screen 11 by the projecting lens 10.

Incidentally, in the reflecting type video projector having no such aperture element as the aperture element 40 provided, the whole portion of the illumination light illuminates the reflecting type display element without shielding any portion thereof. Therefore, the temperature of the reflecting type display element tends to increase compared with the reflecting type projector shown in FIG. 1. Further, a portion of the illumination light, which is to be shielded by the aperture element 40, if any, is reflected by the reflecting type display element and incident on the projecting lens 10. This light portion which passes the projecting lens 10 may produce an image of stray light, etc., in an unexpected position on the screen 11.

The aperture element 40 is adapted to block a portion of the illumination light, which is a cause of the above-mentioned problem, that is, to shield the useless light portion for the reflecting type display element.

However, even when the aperture element 40 is present, there is the problem that a portion of the illumination light is reflected by the light shield portion 42 of the aperture element 40 and is incident on the projecting lens 10, as a result of which an image of stray light etc. is liable to appear in an unexpected position on the screen 11. This phenomenon is illustrated by long dashed-double short dashed lines 200 in FIG. 1.

Features of arrangements to be described below, by way of example, in the belief that they will enable the invention to be better understood are the provision of an aperture element for use in a video projector, and for preventing an image other than a desired image or a stray light from being projected on the screen and a video projector using the same aperture element, and the provision of an aperture element for use in a video projector, which is capable of improving the contrast, which is one of the optical performances of the video projector, and a video projector using the same aperture element.

An aperture element which is to be described below, by way of example in the belief that it will enable the present invention to be better understood and which is for use in an illumination optical system of a video projector including a projecting lens and which is arranged between a reflecting display element and a light source, has an opening portion for allowing an illumination light from the light source to pass to the reflecting type display and a reflecting portion in a peripheral portion of the opening portion for reflecting a useless portion of the illumination light from the light source to an area outside an incident area of the projecting lens.

In the above-mentioned aperture element, the reflecting portion may be formed on the aperture element at a predetermined angle with respect to the plane of the opening portion thereof.

The reflecting portion of the aperture element is provided in one arrangement on a whole peripheral portion of the opening portion.

Alternatively, the reflecting portion of the aperture element may be formed on the side of the periphery of the opening portion in which an incident angle of the illumination light, which is incident on the reflecting type display at an angle other than a right angle, on the plane of the opening portion, is acute.

A video projector will be described below, in the belief that it will enable the invention to be better understood, which includes the above-mentioned aperture element.

In operating the video projector to be described, the reflecting portion of the aperture element reflects a portion of an illumination light incident thereon to an area outside an incident area of the projecting lens such that the portion of the illumination light, which is useless or detrimental to projection of image information displayed on the reflecting type display element, is not incident on the projecting lens. The reflecting portion formed on the periphery of the opening portion of the aperture element at a predetermined angle with respect to the plane of the opening portion reflects the illumination light to an area of the projecting lens outside the incident area thereof, such that the useless portion of the illumination light is not incident on the projecting lens. Further, the reflecting portion formed on the whole peripheral portion of the opening portion at the predetermined angle with respect to the plane of the opening portion reflects the illumination light to an area outside the incident area of the projecting lens such that a useless portion of the illumination light is not incident on the projecting lens. Further, the reflecting portion formed at a predetermined angle on the side of the peripheral portion of the opening portion of the aperture element, in which an angle between the incident illumination light incident on the reflecting type display element at other angle than a right angle and the plane of the opening portion is acute, reflects the illumination light to an area outside the incident area of the projecting lens such that the useless portion of the illumination light is not incident on the projecting lens.

The following description and Figs. 3 to 6 of the accompanying drawings disclose, by means of examples, the invention which is defined in the appended claims, whose terms determine the extent of the protection conferred hereby.

In the drawings:-
FIG. 3 shows schematically the arrangement of a reflecting type video projector,
FIG. 4A is a perspective view of an aperture element 7 shown in FIG. 3,
FIG. 4B is a front view of the aperture element shown in FIG. 4A,
FIG. 4C is a side view of the aperture element shown in FIG. 4A,
FIG. 4D is a rear view of the aperture element shown in FIG. 4A,
FIG. 4E is a cross section taken along a line A-A in FIG. 4D,
FIG. 5 shows schematically an arrangement of another reflecting type video projector,
FIG. 6A is a perspective view of an aperture element 17 shown in FIG. 5,
FIG. 6B is a front view of the aperture element shown in FIG. 6A,
FIG. 6C is a side view of the aperture element shown in FIG. 6A,
FIG. 6D is a rear view of the aperture element shown in FIG. 6A, and
FIG. 6E is a cross section taken along a line B-B in FIG. 6D.

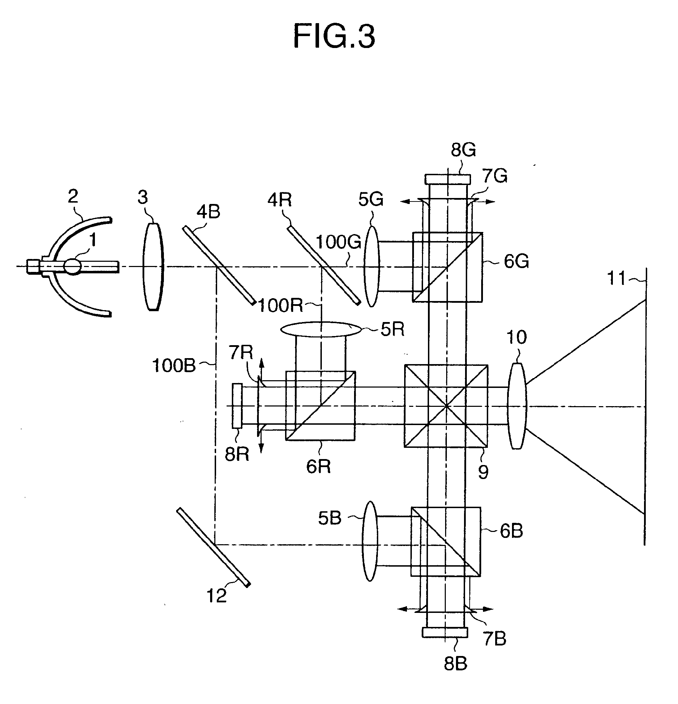

In FIG. 3, in which corresponding elements are indicated by the same reference numerals as are used in referring to Fig. 1, the reflecting type video projector shown includes a light source 1, a reflector 2, a convex lens 3, dichroic mirrors 4B and 4R, convex lenses 5B, 5G and 5R, polarizing beam splitters 6B, 6G and 6R, identical aperture elements 7B, 7G and 7R, reflecting type liquid crystal panels 8B and 8R, a color synthesizing prism 9, a projecting lens 10, a screen 11 and a reflection mirror 12.

The aperture element 7B is provided substantially in parallel to the reflecting type liquid crystal panel 8B and the aperture elements 7G and 7R are also provided similarly with respect to the reflecting type liquid crystal panels 8G and 8R, respectively.

That is, the reflecting type video projector being described differs from the previously proposed projector shown in FIG. 1 in only the aperture elements 7B, 7G and 7R and, therefore, any description of the operation of other components of the reflecting type projector being described than the aperture elements will be omitted in order to avoid duplication.

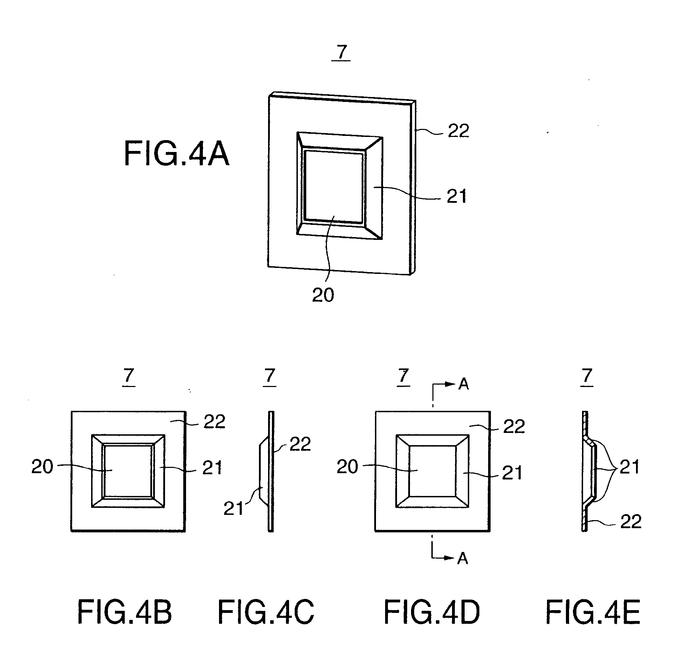

FIG. 4A to FIG. 4E show the construction of the aperture element 7 shown in FIG. 3, which may be any of the aperture elements 7B, 7G and 7R and which has an opening portion 20, a reflecting portion 21 and a light shield portion 22.

The opening portion 20 allows only a portion of an illumination light from any one of the polarizing beam splitters 6B, 6G and GR, which portion is necessary to project an image onto the screen 11 to pass through and to illuminate one of the reflecting type liquid crystal panels 8B, 8G and 8R.

The reflecting portion 21 is provided in a periphery of the opening portion 20 at a predetermined angle with respect to a plane of the opening portion 20 and functions to prevent a useless or detrimental portion of the illumination light from being incident on the related reflecting type polarizing beam splitter and to reflect the useless light portion to an area outside an incident area of the projecting lens 10, such that it is not incident on the projecting lens 10.

The light shield portion 22 surrounds the opening portion 20 such that the useless light portion of the illumination light does not illuminate the related reflecting type liquid crystal panel. The useless light portion reflected by the light shield portion 22 is never incident on the projecting lens 10, because, in the present arrangement, the reflecting portion 21 is provided in a portion of the aperture element 20 corresponding to an area of the conventional aperture element 40 shown in FIG. 2 on which the light reflected by the light shield portion 42 of the previously proposed aperture element 40 is to be incident.

In the present arrangement, the illumination light illuminates the front surface of the aperture element 7 including the slanted reflecting portion 21 protruding from the front plane thereof at the predetermined angle with respect to the front plane as shown in FIG. 4B, and passes through the opening portion 20.

In FIG. 3 and FIG. 4A to FIG. 4E, only a portion of the blue illumination light from the polarizing beam splitter 6B in the B system 100B, which is necessary to project the image information displayed on the liquid crystal panel 8B onto the screen 11, passes through the opening portion 20 of the aperture element 7B. The reflecting portion 21 and the light shield portion 22 block other illumination light portions than the necessary light portion, so that the useless light portion thereof never illuminates the liquid crystal panel 8B.

Since the reflecting portion 21 is provided at the predetermined angle with which the useless blue illumination light is reflected towards the area outside the incident area of the projecting lens 10, the useless light reflected thereby is never incident on the projecting lens 10.

The necessary blue illumination light passed through the opening portion 20 of the aperture element 7B is incident on the liquid crystal panel 8B at substantially a right angle. The liquid crystal panel 8B optically modulates the blue illumination light and emits an image light. The image light emitted from the liquid crystal panel 8B passes through the opening portion 20 of the aperture element 7B again and is incident on the polarizing beam splitter 6B.

The polarizing beam splitter 6B passes a predetermined polarized component of the image light towards the color synthesizing prism 9. The function of the G system as well as the R system is similar to that of the B system.

The blue, green and red color images from the respective polarizing beam splitters 6B, 6G and 6R are synthesized in this manner by the color-synthesizing prism 9. A resultant color image light is expanded by the projecting lens 10 and projected onto the screen 11.

As described, the slanted reflecting portion 21 is provided to surround the opening portion 20 of the aperture element 7. Therefore, the portions of the illumination light, which are prevented from being incident on the reflecting type liquid crystals 8B, 8G and 8R by the reflecting portions 21 of the aperture elements 7B, 7G and 7R, are reflected in a direction towards areas outside the projecting lens 10.

In the arrangement described, the aperture element 7 is preferably formed of a heat durable, translucent material such as, for example, copper, having a high thermal conductivity. When a copper plate is used to form the aperture element 7, it is possible easily to form the reflecting portion 21 by a punching press. Further, in order to prevent light incident on a surface of the reflecting portion 21, that is, the surface thereof illuminated with the illumination light, from scattering due to an increase in the amount of illumination light, the surface of the reflecting portion 21 may be mirror-polished. Further, in order to facilitate the absorption of illumination light, it is preferable that a surface of the light shield portion 22, which is illuminated with the illumination light, is blackened by painting or plating.

The predetermined angle of the reflecting portion 21 of the aperture element 7 with respect to the plane thereof is preferably in a range from 25 degrees to 65 degrees although the most preferable angle is 45 degrees. However, the predetermined angle depends upon the sizes of the aperture element 7 and the polarizing beam splitter 6 and the positional relation therebetween. Satisfactory arrangements can be achieved with the predetermined angle in a range from 5 degrees to 85 degrees.

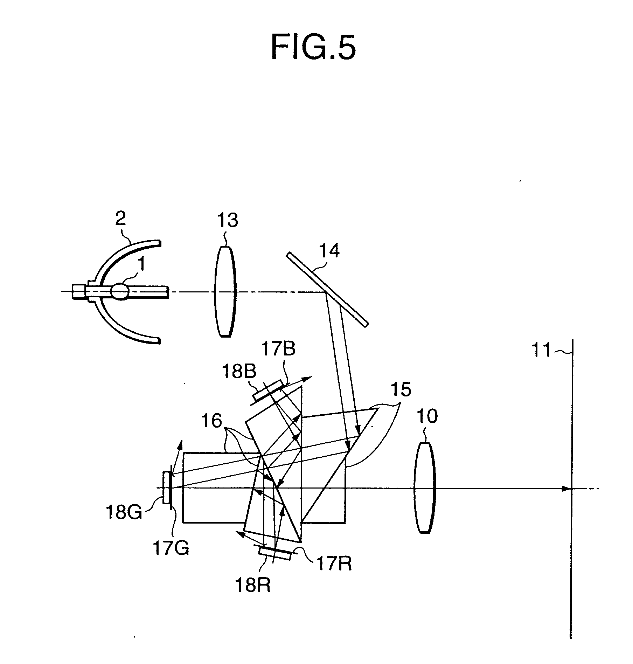

A second reflecting type projector arrangement will now be described with reference FIG. 5. In FIG. 5, same constructive components as those shown in FIG. 1 and in FIG. 3 are depicted by the same reference numerals, respectively, and a detailed description thereof will not be given.

In FIG. 5, the reflecting type video projector includes a light source 1, a reflector 2, a projecting lens 10, a screen 11, a relay lens 13, a reflecting mirror 14, a reflecting prism 15 composed of 2 prisms, a color prism 16 composed of 3 parts, identical aperture elements 17B, 17G and 17R and DMD's 18B, 18G and 18R.

The DMD used in this arrangement is one of the known reflecting type display elements and is made with a plurality of micro mirrors supported by respective flexible support members and arranged in a matrix, with control electrodes each provided in the vicinity of a micro mirror. By supplying video signals corresponding to respective pixels to the control electrodes, respectively, reflecting faces of the micro mirrors are selectively deflected by electrostatic attraction forces generated by the video signals to reflect light reflected by specific ones of the micro mirrors to a color prism.

The aperture element 17B is provided substantially in parallel to the DMD 18B. Similarly, the aperture elements 17G and 17R are provided substantially in parallel to the DMD's 18G and 18R, respectively.

The reflecting type video projector of this arrangement has the feature that illumination light is incident on the DMD's 18B, 18G and 18R at an angle other than a right angle, unlike the reflecting type video projector shown in FIG. 3.

The light source 1 has a reflector 2 in the form of a parabolic mirror and light emitted from the light source 1 is reflected by the reflector 2 as the illumination light. The illumination light passes through the relay lens 13 and is reflected by the reflecting mirror 14. The reflected illumination light is separated into blue, red and green illumination lights by the reflecting prism 15.

The relay lens 13 is provided in order to collect illumination light efficiently to the DMD's 18B, 18G and 18R and the reflecting mirror 14 is arranged at a predetermined angle with respect to an optical axis of the illumination light such that the illumination light is incident on the reflecting prism 15 at substantially a right angle. Further, the reflecting prism 15 and the color prism 16 function to guide the incident illumination light to the DMD's 18B, 18G and 18R at an angle other than a right angle.

The blue, green and red illumination lights separated by the color prism 16 are directed to the corresponding DMD 18B, 18G and 18R, respectively. That is, the blue illumination light, the green illumination light and the red illumination light are incident on the DMD 18B, the DMD 18G and the DMD 18R through the aperture elements 17B, 17G and 17R, respectively, at angles other than a right angle.

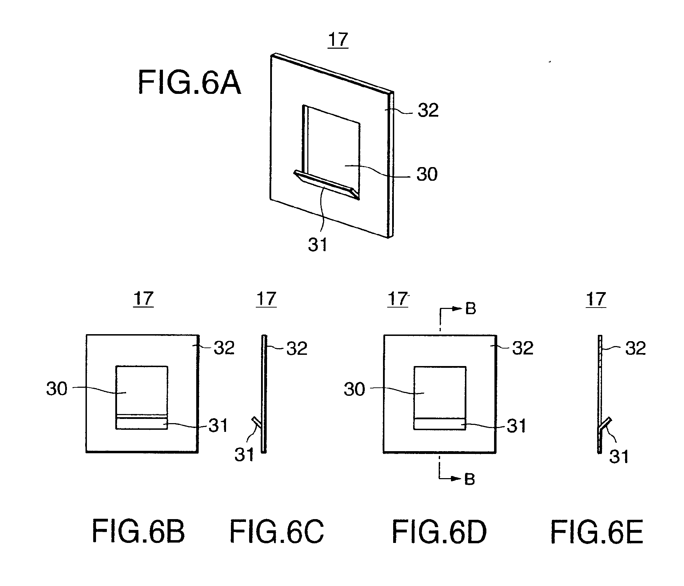

FIG. 6A to FIG. 6E show a construction of the aperture element 17, in which FIG. 6A is a perspective view of an aperture element 17, which is used as each of the aperture elements 17B, 17G and 17R, and which includes an opening portion 30, a reflecting portion 31 and a light shield portion 32.

The opening portion 30 allows only a portion of the illumination light emitted from the color prism 16, which is necessary for an image to be projected onto the screen 11, to pass to the DMD's 18B, 18G and 18R.

The reflecting portion 31 is provided in a peripheral portion of the opening portion 30, in which the incident illumination light makes an acute angle with respect to a plane of the opening portion 30, at a predetermined angle with respect to the plane of the opening portion 30. The reflecting portion 31 shields the useless portion of the illumination light such that the useless illumination light is not incident on the DMD's 18B, 18G and 18R and reflects the useless illumination light to an area outside an incident area of the projecting lens 10 such that it is not incident on the projecting lens 10.

The light shield portion 32 surrounds the opening portion 30 and blocks the useless portion of the illumination light such that the useless light portion of the illumination light does not illuminate the DMD's 18B, 18G and 18R. The useless light portion reflected by the light shield portion 32 is never incident on the projecting lens 10. This is because the reflecting portion 31 is provided in a portion of the aperture element 17, on which the useless light reflected by the light shield portion 32 is possibly incident.

The illumination light illuminates the front surface of the aperture element 17 shown in FIG. 6B, from which the reflecting portion 31 protrudes at the predetermined angle with respect thereto, and the necessary portion thereof passes through the opening portion 30.

In FIG. 5 and FIG. 6A to FIG. 6E, since the behaviors, of the blue, green and red illumination lights emitted from the color prism 16 are similar, the behavior of only the blue illumination light will be described.

The aperture element 17B allows only portion of the blue illumination light, which is necessary to project an image, to pass through the opening portion 30 thereof. The other, useless blue illumination light is blocked by the reflecting portion 31 and the light shield portion 32 and, therefore, the DMD 18B is not illuminated by the useless blue light.

Since the reflecting portion 31 is provided in a peripheral portion of the opening portion 30, in which the incident illumination light makes an acute angle with respect to a plane of the opening portion 30, at a predetermined angle with respect to the plane of the opening portion 30, and, in FIG. 5, it is provided on the upper side of the opening portion 30, the useless light incident on the reflecting portion 31 is reflected to the area outside the incident area of the projecting lens 10.

The DMD 18B reflects the blue image light passed through the opening portion 30 towards the projecting lens 10 by controlling attitudes of the micro mirrors. The blue image light from the DMD 18B passes through the opening portion 30 again and is incident on the color prism 16.

In this manner, the blue, green and red color image lights are synthesized by the color prism 16. The synthesized image light passes through the reflecting prism 15 and is expanded by the projecting lens 10 and projected onto the screen 11.

Also in this arrangement, the aperture element 17 is preferably formed of a heat durable translucent material such as, for example, copper, having high thermal conductivity for the same reason as in the arrangement first described. When a copper plate is used to form the aperture element 17, it is possible easily to form the reflecting portion by a punching press. Further, in order to prevent light incident on a surface of the reflecting portion 31, that is, the surface thereof illuminated with the illumination light, from scattering due to an increase in the amount of illumination light, the surface of the reflecting portion 31 may be mirror-polished. In such a case, it is possible to reliably to direct the reflected light such that it is not incident on the projecting lens 10. Further, in order to facilitate the absorption of the illumination light by the light shield portion 32, it is preferable that a surface of the light shield portion 32, which is illuminated with the illumination light, is blackened by painting or plating. When a copper plate is used for the aperture element, it is preferable to form the reflecting portion by a punching press, etc., to polish it and, then, to blacken the light shield portion by painting it with black paint in order to prevent the unnecessary reflection of light.

Although, the predetermined angle of the reflecting portion of the aperture element with respect to the plane thereof is most preferably in a range from 60 degrees to 65 degrees, the range may be from 50 degrees to 75 degrees. However, the predetermined angle depends upon the sizes of the aperture element 17 and the polarizing beam splitter 16 and the positional relation therebetween. The required result can be achieved with the predetermined angle in a range from 40 degrees to 85 degrees.

As described hereinbefore, the advantage of the arrangements described is that it is possible to minimise the generation of unexpected image or stray light on the screen due to the reflection of light by the aperture element and thereby to improve the contrast of projected image, which is one of the optical characteristics of the projector. This is because the aperture element is provided with the reflecting portion on the periphery of the opening portion thereof such that illumination light reflected by the reflecting portion is not incident on the projecting lens.

In the arrangements shown in FIG. 4A to FIG. 4E and FIG. 6A to FIG. 6E, since the image projected onto the screen 11 is usually square, the opening portions 20 and 30 are square, respectively. However, the configuration of the opening portion may, for example, be circular or polygonal, provided that such configuration does not produce any adverse influence on the image projected on the screen.

It will be understood that although particular arrangements have been described, by way of example in the belief that their description will enable the invention to be better understood, variations and modifications thereof, as well as other arrangements, may be conceived within the scope of the protection sought by the appended claims.

## Claims

1. An aperture element for use in a video projector having a reflecting type display element for reflecting light from a light source as a light beam containing a predetermined image information, an illuminating optical system including a projecting lens for projecting the light beam containing the image information in a predetermined direction, and an aperture element between the light source and the reflecting type display element, the aperture element including an opening portion for allowing light from the light source to pass through to the reflecting type display element, and a reflecting portion on a periphery of the opening portion to reflect a useless portion of the light from the light source to an area outside an incident area of the projecting lens.

2. An aperture element as claimed in claim 1, wherein the reflecting portion of the aperture element is formed on the periphery of the opening portion at a predetermined angle with respect to a plane of the opening portion.

3. An aperture element as claimed in claim 1, wherein the reflecting portion of the aperture element is provided on the whole periphery of the opening portion.

4. An aperture element as claimed in claim 1, wherein the illumination light is incident on the reflecting type display element at an angle other than a right angle and the reflecting portion is on a portion of the periphery of the opening portion on the side in which an angle between the incident illumination light and the plane of the opening portion is acute.

5. An aperture element as claimed in claim 1, wherein the reflecting portion of the aperture element is mirror-polished.

6. An aperture element as claimed in claim 1, wherein the aperture element includes a light shield portion surrounding the opening portion and light shield portion is blackened.

7. A video projector including a reflecting type display element for reflecting light from a light source as a light beam containing predetermined image information, an illuminating optical system having a projecting lens for projecting the light beam containing the image information in a predetermined direction, and an aperture element provided between the light source and the reflecting type display element, the aperture element including an opening portion for allowing light from the light source to pass through to the reflecting type display element and a reflecting portion on a periphery of the opening portion to reflect a useless portion of the light from the light source to an area outside an incident area of the projecting lens.

8. A video projector as claimed in claim 7, wherein three sets of the reflecting type display elements and the illumination optical systems corresponding to the three primary colors and the aperture element is provided for each set of the reflecting type display element and the illumination optical system.
